# EUROPÄISCHE PATENTSCHRIFT

(11) **EP 0 851 738 B1**
(45) Veröffentlichungstag und Bekanntmachung des Hinweises auf die Patenterteilung: **21.02.2001**
(21) Anmeldenummer: 96929180.6
(22) Anmeldetag: 10.09.1996
(51) Int. Cl.: A23L 1/16

(54) **GEFÜLLTE TEIGWARE IN SCHNECKENFORM**
FILLED PASTA ROLLED IN THE SHAPE OF A COIL
PATES FARCIES DE FORME HELICOIDALE

(30) Priorität: 20.09.1995 DE 19534973
(43) Veröffentlichungstag der Anmeldung: 08.07.1998
(73) Patentinhaber: Speedy Gastronomica S.A., 6648 Minusio (CH)
(72) Erfinder: Brönner, Peter, 81479 München (DE)
(86) Internationale Anmeldenummer: DE9601702
(87) Internationale Veröffentlichungsnummer: WO9710728

(56) Entgegenhaltungen:
- EP-A- 0 486 736
- DE-A- 4 408 724
- DE-C- 4 219 570
- DE-U- 29 515 099
- FR-A- 2 718 925
- PATENT ABSTRACTS OF JAPAN vol. 007, no. 139 (C-171), 17.Juni 1983 & JP 58 051863 A (SABUROU HAYASHI;OTHERS: 01), 26.März 1983,

## Beschreibung

Die Erfindung betrifft eine Teigware in Form einer langen Röhre, die gekocht und wie eine Schnecke gerollt ist.

Aus DE 42 19 570 C1 ist es bekannt, eine Teigware in Form einer Röhre auszubilden, die über ihre Länge verteilt angeordnete Löcher aufweist, deren Gesamtfläche mindestens so groß wie die Fläche der stirnseitigen Öffnung ist. Zum Bereiten eines Gerichts mit einer solchen Teigware können rohe, langgestreckte Gemüseteile in jeweils eine Röhre eingeschoben werden.

In DE 44 08 724 A1 wird vorgeschlagen, Spaghetti-Nudeln anstelle ihrer Längsform in Schnecken- oder Kranzform auszubilden, wobei an einzelnen Stellen eine Verbindung zwischen den Windungen vorgesehen wird, die sich innerhalb der Kochzeit auflöst, damit die Nudeln wieder ihre Längsform erhalten.

Aus US 4 259 051 ist es schließlich bekannt, z.B. Ketchup, Gelee oder dergleichen durch Koextrusion in Teigschläuche zu füllen. Ein derart gefüllter Teigschlauch wird dann in Stücke geschnitten, deren Enden verschlossen werden.

Diese bekannten Ausführungsformen von Teigwaren sind nicht für den Unterwegsverzehr geeignet bzw. vorgesehen.

Der Erfindung liegt die Aufgabe zugrunde eine Teigware der eingangs angegebenen Art so auszubilden, daß sie für den Unterwegsverzehr geeignet ist.

Diese Aufgabe wird erfindungsgemäß durch die Merkmale im Anspruch 1 gelöst, wonach die Röhre an einer Seite geschlossen und an der anderen Seite offen sowie mit Soße gefüllt ist.

Durch die Schneckenform läßt sich die gefüllte Teigware leicht transportieren und z.B. als Imbiß-Produkt mit einem Stäbchen in der Hand halten. Dadurch, daß eine Seite der Röhre offen ist, kann der Verbraucher die Füllung leicht erkennen.

Die Erfindung wird beispielsweise anhand der Zeichnungen näher erläutert. Es zeigen
- Fig.1: in perspektivischer Ansicht eine Teigware in Schnekkenform, und
- Fig.2: eine Draufsicht auf die Teigware in Schneckenform.

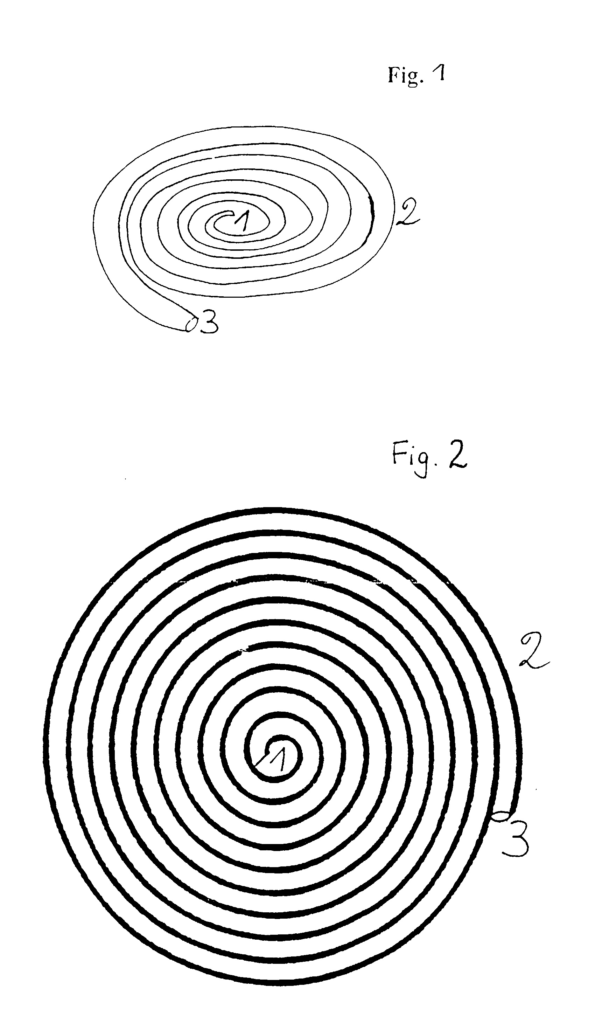

Fig.1 zeigt eine perspektivische Ansicht einer Teigware in Form einer langen Röhre (2), die in Schneckenform gerollt ist. Mit (1) ist das innenliegende Ende der Röhre bezeichnet, das geschlossen ausgebildet ist, während das außenliegende Ende (3) offen ist. Die Röhre (2) ist mit einer Füllung in Form einer Soße gefüllt, wobei die Soßenfüllung auf übliche Weise eingebracht werden kann. Es ist auch möglich, die Soßenfüllung erst nach dem Kochen der Teigware in die Röhre durch Pressen einzuführen.

Die Teigware dient damit als Transportbehälter für die Soße, die nicht wie sonst üblich über die Teigware gegeben wird. Dennoch kann der Verbraucher durch die Öffnung an einem Ende die Art der Soßenfüllung erkennen.

Der Außendurchmesser der Teigware in Schneckenform kann ca. 10 bis 20 mm betragen. Die Länge der auseinandergerollten Schnecke kann dabei ca. 80 bis 100 cm betragen. Die Röhrenöffnung (3) kann auf ca. 5 bis 15 mm ausgelegt werden.

Für den Verzehr kann die Teigwarenschnecke in eine flache Papiertüte eingesteckt werden, damit sie bequem gehalten werden kann. Zur Unterstützung der Handhabung kann durch die Mitte der Schnecke auch ein Holzstäbchen oder dergleichen als Halter eingesteckt werden.

Die Teigware besteht vorzugsweise aus Mehl oder Grieß, insbesondere Hartweizengrieß, wie dies bei Spaghetti und italienischen Nudeln üblich ist. Dieses Nudelmaterial, das im Rohzustand hart und trocken ist, wird durch Kochen in klarem, gegebenenfalls leicht gesalzem Wasser genießbar gemacht. Durch die Soßenfüllung in der in Schneckenform gerollten Nudel kann die Nudel mit Soße ohne weitere Hilfsmittel wie Besteck auch unterwegs leicht verzehrt werden, so daß sich diese Form für den Fast-Food-Bereich besonders eignet. Gegessen wird die Teigware dadurch, daß man Stück für Stück von außen mit Soßeninhalt abbeißt, wodurch ein Kleckern und Verschmieren weitgehend verhindert werden kann. Eine solche gefüllte Nudel in Schneckenform kann als kleine Zwischenmahlzeit dienen, die ein Gewicht von ca. 80 bis 100 g hat. Als Füllung können Soßen vorgesehen werden, die nicht zu körnige Ingredienzien enthalten und eine gewisse Fließfähigkeit besitzen.

## Patentansprüche

1. Teigware, die gekocht und wie eine Schnecke gerollt ist,
**dadurch gekennzeichnet,**
daß die Teigware in Form einer langen Röhre (2) an einer Seite geschlossen und an der anderen Seite (3) offen sowie mit Soße gefüllt ist.

2. Teigware nach Anspruch 1,
**dadurch gekennzeichnet,**
daß die Röhre einen Außendurchmesser von 10 bis 20 mm und eine Gesamtlänge von 80 bis 100 cm hat.

3. Teigware nach Anspruch 1 oder 2,
**dadurch gekennzeichnet,**
daß in der Mitte der Schnecke ein Halter in der Art eines Holzstäbchens angebracht ist.

## Claims

1. Pasta which is cooked and rolled into the shape of a coil, characterized in that the pasta is in the shape of a long tube, one end of the tube (2) being sealed and the other end (3) open and filled with sauce.

2. Pasta according to Claim 1, characterized in that the tube has an outer diameter of 10 to 20 mm and a total length of 80 to 100 cm.

3. Pasta according to Claim 1 or 2, characterized in that a handle such as a wooden stick or the like is stuck in the middle of the pasta coil.

## Revendications

1. Pâte en forme de long tube qui est cuîte et enroulée en forme d'escargot
caractérisée
d'une extrèmité du tube (2) fermée et de l'autre extrèmité (3) ouverte et farcies avec la sauce.

2. Pâte selon l'exigence 1,
caractérisée
d'un diamètre du tube de 10 à 20 mm et de la longeur totale d'environ 80 à 100 cm.

3. Pâte selon l'exigence 1 ou 2
caractérisée
d'une poignée comme une baguette en bois ou bien quelque chose de semblable enfoncée au milieu de l'escargot de pâte.
